# EUROPÄISCHE PATENTSCHRIFT

(11) **EP 3 395 179 B1**
(45) Veröffentlichungstag und Bekanntmachung des Hinweises auf die Patenterteilung: **30.06.2021**
(21) Anmeldenummer: 17167675.2
(22) Anmeldetag: 24.04.2017
(51) Int. Cl.: A23C 15/06, A23C 9/142, A23L 27/21, A23C 9/12

(54) **BUTTER MIT KARAMELLNOTE UND HERSTELLUNGSVERFAHREN**
BUTTER WITH CARAMEL NOTE AND BUTTER MANUFACTURING PROCESS OF
BEURE AVEC NOTE AU CARAMEL ET PROCÉDÉ DE SA FABRICATION

(43) Veröffentlichungstag der Anmeldung: 31.10.2018
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- SG-A1- 194 854
- US-A1- 2005 181 095
- US-A1- 2013 330 460
- Bernard Wernick Hammer ET AL: "Burnt or caramel flavor of dairy products", Research Bulletin (Iowa Agriculture and Home Economics Experiment Station, Juli 1921 (1921-07), XP055390104, Gefunden im Internet: URL:http://lib.dr.iastate.edu/cgi/viewcont ent.cgi?article=1075&context=researchbulle tin [gefunden am 2017-07-12]

## Beschreibung

### GEBIET DER ERFINDUNG

Die Erfindung befindet sich auf dem Gebiet der Milchprodukte und betrifft eine Butter mit einer Karamellgeschmacksnote und ein Verfahren zu ihrer Herstellung.

### STAND DER TECHNIK

Zur traditionellen Herstellung von Karamell wird Kristallzucker (Saccharose) unter ständigem Rühren trocken in einer Pfanne auf starkem Feuer erhitzt. Beginnt der Zucker zu schmelzen, dauert es nur wenige Sekunden, bis der Karamell eine dunkle Farbe annimmt - die Herstellung verlangt entsprechend ständige Aufmerksamkeit. Damit die Masse anschließend nicht erstarrt, wird sie, wenn der gewünschte Bräunungsgrad erreicht ist, mit kochendem Wasser abgelöscht und zu einem Sirup aufgelöst.

Obwohl es sich um eine der ältesten Prozesse des Kochens handelt, ist seine Chemie bis heute noch nicht völlig verstanden. Offenbar laufen verschiedene Reaktionen gleichzeitig ab, darunter eine Veränderung der Mutarotation (bei Saccharose eine Inversion), Oxidationen, Kondensationsreaktionen, Polymerisationen, Umlagerungen, wie Isomerisierungen und eine teilweise Pyrolyse, bei dunklerem Karamell zunehmend sogar eine Verkohlung. Der Zucker wird entwässert, und die Kohlenhydrate verbinden sich zu verschiedenen Polymeren, Ketonen und Aldehyden, von denen einige für die braune Färbung und den bitteren Geschmack verantwortlich sind. Daher schmeckt Karamell umso herber, je dunkler er gebrannt ist. Als charakteristische Gerüche entstehen beispielsweise verschiedene Dihydrofuranone, Cyclopentenolone, Cyclohexenolone und Pyrone (z. B. Maltol).

Um Gerichten einen Karamellgeschmack zu verleihen, wird in der Regel wie eingangs beschrieben verfahren, was jedoch den Nachteil hat, dass der Prozess häufig entgleitet und ein Produkt erhalten wird, das bitter schmeckt oder sogar einen leicht verkohlten Eindruck macht. Daher besteht ein Bedürfnis im Markt nach Nahrungsmitteln bzw. Zutaten zur Herstellung von Nahrungsmitteln mit Karamellnote, die diesen Geschmack bereits aufweisen und daher ohne weiteres an die damit zubereiteten Gerichte weitergeben können.

Ein solches Nahrungsmittel, welches sich dafür ganz besonders eignen würde, wäre eine "Karamellbutter", also eine handelsübliche Butter, die über eine karamellige Geschmacksnote verfügt. Diese könnte sowohl als Brotaufstrich direkt genutzt werden oder aber zum Kochen und Backen dienen.

Butter wird bekanntlich aus Milch hergestellt. Milch enthält eine geringe Menge an Zucker, so dass man daran denken könnte, diesen Gehalt ganz oder teilweise zu karamellisieren und dann die karamellisierte Milch zu verbuttern. In der Praxis gelingt dies jedoch aus folgenden Gründen nicht: Bei der Herstellung von Magermilch fällt zwar eine Rahmfraktion an, die etwa 40 Gew.-% Fett und etwa 4 Gew.-% Trockenmasse aufweist, aber der Zuckergehalt von nicht mehr als 2 Gew.-% ist viel zu gering, um durch Karamellisierung eine entsprechende Geschmacksnote hervorzurufen. Alternativ könnte man die Separation so führen, dass man eine Rahmfraktion erhält, die nur 10 bis 20 Gew.-% enthält, jedoch 15 bis 16 Gew.-% Trockenmasse und davon etwa die Hälfte wiederum Zucker. Der Zuckergehalt wäre dann für eine Karamellisierung zwar ausreichend, der Fettgehalt aber zu gering, so dass man das Produkt nicht verbuttern kann.

Schließlich könnte man der Butter schlicht Karamell oder Karamellgeschmack zusetzen. Dies würde aber dazu führen, dass das Produkt nicht mehr der ButterVO genügt und nur noch als Butterzubereitung verkauft werden dürfte. Es liegt auf der Hand, dass der Verbraucher viel eher zu einer "echten" Butter mit Karamellgeschmack als zu einer Butterzubereitung greifen wird.

Gegenstand des Aufsatzes von Hammer et al mit dem Titel "Burnt or caramel flavor of dairy products", Research Bulletin (Iowa Agriculture and Home Economics Experiment Station), July 1921, 147-156, ist eine Untersuchung über die Ursache der Karamellnote in Milchprodukten, insbesondere in Butter. Die Hauptlehre dieses Dokuments ist, dass die Karamellnote auf die Anwesenheit bestimmter Mikroorganismen zurückzuführen ist.

Das Dokument US 2013/0330460 A1 betrifft konzentrierte Molkereiprodukte mit einem hohem Feststoffgehalt, die eine gute Stabilität und organoleptische Eigenschaften aufweisen, sowie deren Herstellungsverfahren. Die Molkereiflüssigkeit wurde durch einen mehrstufigen Wärme- und Konzentrationsprozess gebildet, um einen gewünschten Sterilisationswert, Produktstabilitätseigenschaften und Milchgeschmacksnoten zu erreichen, indem der Proteingehalt verringert wird, gegebenenfalls der Fettgehalt und das Saccharose-Niveau erhöht wird, der Lactosegehalt reduziert und eine sehr stabile Phasentrennungsrate erreicht wird. Das Verfahren umfasst Vorwärmen, Konzentrieren unter Verwendung von Ultrafiltration mit oder ohne Diafiltration.

Die Aufgabe der vorliegenden Erfindung hat daher darin bestanden, ausgehend von Milch eine Butter zur Verfügung zu stellen, die zum einen eine Karamellnote aufweist und zum anderen der Butterverordnung genügt.

### BESCHREIBUNG DER ERFINDUNG

Ein erster Gegenstand der Erfindung betrifft eine Butter mit Karamellnote, die dadurch erhältlich ist oder erhalten wird, dass man:
(a) Vollmilch durch Separation in eine Magermilch- und eine Rahmfraktion auftrennt;
(b) die so erhaltene Rahmfraktion einer Nanofiltration (NF) und/oder Umkehrosmose (RO) unter Erhalt eines NF/RO-Retentats und eine NF/RO-Permeats unterwirft, wobei die Nanofiltration mit einer Membran durchführt wird, die einen Porendurchmesser im Bereich von 100 bis 5.000 Dalton aufweist;
(c) das so erhaltene NF/RO-Retentat einer Wärmebehandlung bei einer Temperatur im Bereich von 60 bis 125 °C über eine Dauer von 10 bis 30 Minuten unterwirft, wobei der darin enthaltene Zucker zumindest anteilig karamellisiert; und
(d) das so erhaltene karamellisierte NF/RO-Retentat in an sich bekannter Weise verbuttert.

Ein weiterer Gegenstand der Erfindung betrifft ein entsprechendes Verfahren zur Herstellung einer Butter mit Karamellnote, umfassend oder bestehend aus den folgenden Schritten:
(a) Separieren einer Vollmilch in eine Magermilch- und eine Rahmfraktion;
(b) Unterwerfen der so erhaltenen Rahmfraktion einer Nanofiltration (NF) und/oder Umkehrosmose (RO) unter Erhalt eines NF/RO-Retentats und eine NF/RO-Permeats, wobei die Nanofiltration mit einer Membran durchführt wird, die einen Porendurchmesser im Bereich von 100 bis 5.000 Dalton aufweist;
(c) Unterwerfen des so erhaltenen NF/RO-Retentats einer Wärmebehandlung bei einer Temperatur im Bereich von 60 bis 125 °C über eine Dauer von 10 bis 30 Minuten, wobei der darin enthaltene Zucker zumindest anteilig karamellisiert; und
(d) Verbuttern des so erhaltenen karamellisierten NF/RO-Retentats in an sich bekannter Weise.

Auf dem vorgeschlagenen Weg ist es möglich, in einem technisch einfachen Verfahren eine Butter, die der einschlägigen Verordnung genügt zur Verfügung zu stellen, bei der der in der Ausgangsmilch natürlich enthaltene Zucker ganz oder teilweise karamellisiert wird, so dass das Endprodukt die gewünschte karamellige Geschmacksnote aufweist. Das Verfahren ist einfach in der Durchführung und kann sowohl diskontinuierlich, als auch kontinuierlich durchgeführt werden.

### SEPARATION

Unter Separation wird die Abtrennung des Rahms bis auf einen Fettanteil von etwa 0,05 Gew.-% in der mageren Phase (Magermilch) sowie die Entfernung von milchfremden Feststoffen verstanden. Mit der Separation ist in der Regel auch ein Pasteurisierungsschritt verbunden, bei dem die Rohmilch für eine Verweilzeit von mindestens 15 und höchstens 60 Sekunden, vorzugsweise etwa 30 Sekunden auf eine Temperatur von etwa 70 bis 80 °C und insbesondere etwa 72 bis 74 °C erhitzt wird.

Die Separation kann sowohl in der Wärme bei einer Temperatur im Bereich von 20 bis 60 °C oder in der Kälte bei einer Temperatur von 8 bis 20 °C durchgeführt werden.

Im erfindungsgemäßen Verfahren ist es von Vorteil, die Separation kalt durchzuführen. Dabei ist es vorteilhaft, wenn die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6 °C, während die für die Kaltseparation optimale Temperatur im Bereich von 8 bis 18 °C und insbesondere 8 bis 12 °C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35 °C liegt, zugeführt und kühlt sich durch den Wärmeaustausch auf eine Temperatur, die beispielsweise im Bereich von 11 bis 15 °C liegt, ab. Dadurch stellt das erfindungsgemäße Verfahren eine wichtige Kältequelle für Prozesse des Molkereibetriebs zur Verfügung.

Wird die Separation in der Wärme durchgeführt, liegt die bevorzugte Temperatur im Bereich von 35 bis 75 °C, vorzugsweise im Bereich von 50 bis 60 °C.

Die Abtrennung von Feststoffen sowie die Entrahmung des Fettanteils von etwa 4 Gew.-% erfolgen üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "Procool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

Die bei der Separation gewonnene Rahmfraktion weist vorzugsweise mindestens 10 vorzugsweise 20 Gew.-% Fett und mindestens 3 Gew.-% fettfreie Trockenmasse auf.

### NANOFILTRATION

Der geeignete Fettgehalt für die Verbutterung wird durch die nachgeschaltete Filtrationsschritt erreicht, da ein Fettgehalt oberhalb von 42-45 Gew.-% Fett die Verluste beim Verbutter deutlich erhöhen würde. Gleichzeitig wird der Kohlenhydratanteil in der fettfreien trockenmasse erhöht. Somit wird gewährleistet, dass das erhaltene Retentat einen Anteil an Kohlenhydratanteil aufweist, der ausreichend ist, um ein entsprechendes Karamellaroma auszubilden.

Die Nanofiltration stellt ein Filtrationsverfahren aus dem Bereich der Membrantechnik dar, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Nanofiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Die Nanofiltration bevorzugt Porendurchmesser im Bereich von 500 bis 2.000 Dalton.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid.

Die Nanofiltration kann im Sinne der vorliegenden Erfindung "heiß" oder "kalt", d.h. im Temperaturbereich von 8 bis 20 °C oder 20 bis 60 °C durchgeführt werden. Dabei ist die "kalte" Nanofiltration bevorzugt.

### UMKEHROSMOSE

Alternativ oder zusätzlich kann die Rahmfraktion auch einer Umkehrosmose unterworfen werden. Die Umkehrosmose oder Reversosmose ist ein physikalisches Membranverfahren zur Konzentrierung von in Flüssigkeiten gelösten Stoffen, bei der mit Druck der natürliche Osmose-Prozess umgekehrt wird.

Das Verfahrensprinzip besteht darin, dass das Medium, in dem die Konzentration eines bestimmten Stoffes verringert werden soll, durch eine halbdurchlässige (semipermeable) Membran von dem Medium getrennt ist, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Typische Drücke für die Umkehrosmose liegen im Bereich von 3 bis 30 bar (Trinkwasserentsalzung) oder bis zu 80 bar (Meerwasserentsalzung).

Die osmotische Membran, die nur die Trägerflüssigkeit (Solvent) durchlässt und die gelösten Stoffe (Solute) zurückhält, muss diesem hohen Druck standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren, wie dies durch das Lösungs-Diffusions-Modell beschrieben wird: Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen.

Das bei der Nanofiltration bzw. der Umkehrosmose erhaltene Retentat weist vorzugsweise mindestens 15 Gew.-% Trockenmasse und mindestens 10 Gew.-% Zucker und einen Fettgehalt von etwa 40 Gew-.% auf.

### HYDROLYSE

Das Retentat enthält den Zucker in Form von Milchzucker, also Lactose. Lactose gehört zur Gruppe der Disaccharide und besteht aus den beiden Molekülen D-Galactose und D-Glucose, die über eine β-1,4-glycosidische Bindung verbunden sind.

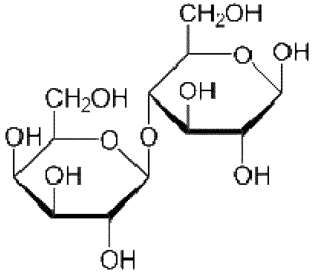

In einer weiter bevorzugten Ausführungsform der vorliegenden Erfindung ist es empfehlenswert, wenn man das NF/RO Retentat vor der Wärmebehandlung mit Lactase versetzt und einer Hydrolyse unterwirft. Dies hat den Vorteil, dass aus einem Molekül Milchzucker zwei Moleküle entstehen, nämlich jeweils ein Molekül Glucose und Galaktose, wodurch der Süßungsgrad verdoppelt wird.

Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 4 bis etwa 65 °C und vorzugsweise im Bereich von 20 bis 30°C sowie einem leicht sauren pH-Wert von etwa 5 bis 6 durchzuführen.

### WÄRMEBEHANDLUNG

Das NF/RO Retentat oder das daraus gewonnene Hydrolysat wird anschließend einer Wärmebehandlung unterworfen, mit dem Ziel, den enthaltenen Zucker ganz oder teilweise zu karamellisieren und so die entsprechende Geschmacksnote zu erzeugen. Die Behandlung kann dabei in einem Rührkessel oder auch einem Wärmeaustauscher durchgeführt werden, wobei die Temperatur im Bereich von 60 bis 125 °C und vorzugsweise 75 bis 120 °C liegt, während die Dauer in der Regel 10 bis 30 Minuten und vorzugsweise 20 bis 25 Minuten beträgt.

Der ganze Prozess angefangen von der Separation bis hin zur Wärmebehandlung kann vollständig diskontinuierlich oder entweder ganz oder teilweise kontinuierlich durchgeführt werden.

### VERBUTTERUNG

Die Verbutterung des wärmebehandelten Retentats kann in an sich bekannter Weise erfolgen. Beim Butterungsprozess wird das fetthaltige Retentat geschlagen. Dadurch werden die Fettkügelchen des Milchfetts zerstört. Die Fetthülle bricht auf und das enthaltene Fett tritt aus. Das Fett verklebt. wobei Teile der Fetthüllen, Wasser und etwas Milcheiweiß eingeschlossen werden. Aus der flüssigen Fett-in-Wasser-Emulsion wird eine feste Wasserin-Fett-Emulsion. Der mit Abstand größte Teil dieser fettfreien Komponenten (Milchserum) tritt als Buttermilch aus. Die Butter selbst wird schließlich zu einer homogenen, geschmeidigen Masse geknetet, die anschließend geformt und abgepackt wird.

In industriellen Butterungsmaschinen, die aus einem Schläger, einer Trommel und einem Kneter bestehen, wird der Rahm bzw. das fetthaltige Retentat geschlagen, die Butter abgetrennt und geknetet. Anschließend wird die Butter in einer Ausformmaschine geformt und abgepackt. Als Nebenprodukt der Butterung entsteht die Buttermilch, die ebenfalls eine Karamellnote aufweisen kann.

### BEISPIELE

### BEISPIEL 1

2000 kg Rohmilch wurden auf 6 °C abgekühlt und mit Hilfe eines Plattenwärmeaustauschers innerhalb von 40 Sekunden auf 55 °C erwärmt. Die vorgewärmte Milch wurde in einen Separator geleitet, in dem der Rahm abgetrennt wurde. Es wurden 400 kg einer Rahmfraktion mit einem Fettgehalt von 20 Gew.-% und einer fettfreien Trockenmasse von 6 Gew.-% erhalten, wobei die Hälfte der Trockenmasse aus Lactose bestand. Die Rahmfraktion wurde einer Nanofiltrationseinheit zugeleitet, die mit einer Spiralwickelmembran mit einer Porenweite von 1.000 Dalton versehen war. Die Rahmfraktion wurde bei 10 °C filtriert, wobei 200 kg Permeat erhalten wurde, das in andere Weise verarbeitet wurde, sowie 200 kg Retentat mit 40 Gew.-% Fett und einem Anteil von 12% fettfreier Trockenmase, hiervon ca. 7-8 Gew.-% Lactose. Das Retentat wurde in einen Plattenwärmeaustauscher geleitet und dort über einen Zeitraum von etwa 20 Minuten bei 100°C erhitzt. Das austretende Produkt hatte eine leicht bräunliche Farbe und besaß eine deutlichen Karamellnote, sowohl bezüglich des Duftes als auch des Geschmacks. Bis zu diesem Punkt wurde das Verfahren kontinuierlich betrieben. Das wärmebehandelte wurde einer Butterungsmaschine aufgegeben und dort bei Umgebungstemperatur zur fertigen Karamellbutter verarbeitet.

### BEISPIEL 2

Beispiel 1 wurde wiederholt, jedoch das NF-Retentat vor der Wärmebehandlung in einen kontinuierlichen Enzymreaktor gemäß EP 2907393 A1 (DMK) geleitet und dort mit Lactase in einer Menge von etwa 200.000 FCC-Einheiten pro kg zu hydrolysierender Lactose versetzt. Der pH-Wert wurde auf 5 eingestellt und die Hydrolyse bei 65 °C durchgeführt. Das hydrolysierte Retentat wurde dann wie oben weiter verarbeitet. Gegenüber dem Endprodukt aus Beispiel 1 zeichnete sich die Karamellbutter durch mehr Süße und deutlichere Karamellnote aus.

## Patentansprüche

1. Butter mit Karamellnote, dadurch erhältlich oder erhalten, dass man:
(a) Vollmilch durch Separation in eine Magermilch- und eine Rahmfraktion auftrennt;
(b) die so erhaltene Rahmfraktion einer Nanofiltration (NF) und/oder Umkehrosmose (RO) unter Erhalt eines NF/RO-Retentats und eine NF/RO-Permeats unterwirft, wobei die Nanofiltration mit einer Membran durchführt wird, die einen Porendurchmesser im Bereich von 100 bis 5.000 Dalton aufweist;
(c) das so erhaltene NF/RO-Retentat einer Wärmebehandlung bei einer Temperatur im Bereich von 60 bis 125 °C über eine Dauer von 10 bis 30 Minuten unterwirft, wobei der darin enthaltene Zucker zumindest anteilig karamellisiert; und
(d) das so erhaltene karamellisierte NF/RO-Retentat in an sich bekannter Weise verbuttert.

2. Verfahren zur Herstellung einer Butter mit Karamellnote, umfassend oder bestehend aus den folgenden Schritten:
(a) Separieren einer Vollmilch in eine Magermilch- und eine Rahmfraktion;
(b) Unterwerfen der so erhaltenen Rahmfraktion einer Nanofiltration (NF) und/oder Umkehrosmose (RO) unter Erhalt eines NF/RO-Retentats und eine NF/RO-Permeats, wobei die Nanofiltration mit einer Membran durchführt wird, die einen Porendurchmesser im Bereich von 100 bis 5.000 Dalton aufweist;
(c) Unterwerfen des so erhaltenen NF/RO-Retentats einer Wärmebehandlung bei einer Temperatur im Bereich von 60 bis 125 °C über eine Dauer von 10 bis 30 Minuten, wobei der darin enthaltene Zucker zumindest anteilig karamellisiert; und
(d) Verbuttern des so erhaltenen karamellisierten NF/RO-Retentats in an sich bekannter Weise.

3. Verfahren nach Anspruch 2, **dadurch gekennzeichnet, dass** man die Separation entweder im Temperaturbereich von 8 bis 20 oder 20 bis 60 °C durchführt.

4. Verfahren nach den Ansprüchen 2 und/oder 3, **dadurch gekennzeichnet, dass** man bei der Separation eine Rahmfraktion herstellt, die mindestens 10 Gew.-% Fett und mindestens 3 Gew.-% Trockenmasse aufweist.

5. Verfahren nach mindestens einem der Ansprüche 2 bis 4, **dadurch gekennzeichnet, dass** man die Nanofiltration mit einer Membran durchführt, die einen Porendurchmesser im Bereich von 500 bis 2.000 Dalton aufweist.

6. Verfahren nach mindestens einem der Ansprüche 2 bis 5, **dadurch gekennzeichnet, dass** man die Nanofiltration bei einer Temperatur im Bereich von 8 bis 20 °C oder 20 bis 60 °C durchführt.

7. Verfahren nach mindestens einem der Ansprüche 2 bis 6, **dadurch gekennzeichnet, dass** man die Umkehrosmose bei einem Druck von 3 bis 80 bar durchführt.

8. Verfahren nach mindestens einem der Ansprüche 2 bis 7, **dadurch gekennzeichnet, dass** man die Umkehrosmose bei einer Temperatur im Bereich von 8 bis 20 °C oder 20 bis 60 °C durchführt.

9. Verfahren nach mindestens einem der Ansprüche 2 bis 8, **dadurch gekennzeichnet, dass** man bei der Nanofiltration und/oder Umkehrosmose ein Retentat herstellt, das mindestens 15 Gew.-% Trockenmasse und mindestens 10 Gew.-% Zucker aufweist.

10. Verfahren nach mindestens einem der Ansprüche 2 bis 9, **dadurch gekennzeichnet, dass** man das NF/RO Retentat vor der Wärmebehandlung mit Lactase versetzt und einer Hydrolyse unterwirft.

11. Verfahren nach mindestens einem der Ansprüche 2 bis 10, **dadurch gekennzeichnet, dass** man die Wärmebehandlung in einem Rührkessel oder einem Wärmeaustauscher durchführt.

12. Verfahren nach mindestens einem der Ansprüche 2 bis 11, **dadurch gekennzeichnet, dass** man es kontinuierlich, halb-kontinuierlich oder diskontinuierlich durchführt.

## Claims

1. A butter with a touch of caramel, obtainable or obtained by:
(a) separating whole milk into a skimmed milk fraction and a cream fraction by means of a separation step;
(b) subjecting the cream fraction such obtained to a nanofiltration (NF) step and/or a reverse osmosis (RO) step, obtaining a NF/RO retentate and a NF/RO permeate, wherein the nanofiltration step is performed by a membrane having a pore size in the range of 100 to 5,000 Dalton;
(c) subjecting the NF/RO retentate such obtained to a heat treatment step at a temperature in the range of 60 to 125 °C for a duration of 10 to 30 minutes, in the process of which the sugar contained therein is caramelised at least in part; and
(d) churning the caramelised NF/RO retentate such obtained in a manner known per se.

2. A process for the production of a butter with a touch of caramel, comprising or consisting of the following steps:
(a) separating whole milk into a skimmed milk fraction and a cream fraction;
(b) subjecting the cream fraction such obtained to a nanofiltration (NF) step and/or a reverse osmosis (RO) step, obtaining a NF/RO retentate and a NF/RO permeate, wherein the nanofiltration step is performed by a membrane having a pore size in the range of 100 to 5,000 Dalton;
(c) subjecting the NF/RO retentate such obtained to a heat treatment step at a temperature in the range of 60 to 125 °C for a duration of 10 to 30 minutes, in the process of which the sugar contained therein is caramelised at least in part; and
(d) churning the caramelised NF/RO retentate such obtained in a manner known per se.

3. Process according to claim 2, **characterized in that** the separation step is performed either in the range of temperature of 8 to 20, or 20 to 60 °C.

4. Process according to the claims 2 and/or 3, **characterized in that** a cream fraction is produced during the separation step having at least 10% by weight fat and at least 3% by weight dry matter.

5. Process according to at least one of claims 2 to 4, **characterized in that** the nanofiltration is performed by a membrane having a pore size in the range of 500 to 2,000 Dalton.

6. Process according to at least one of claims 2 to 5, **characterized in that** the nanofiltration is performed at a temperature in the range of 8 to 20 °C., or 20 to 60 °C.

7. Process according to at least one of claims 2 to 6, **characterized in that** the reverse osmosis is performed at a pressure of 3 to 80 bar.

8. Process according to at least one of claims 2 to 7, **characterized in that** the reverse osmosis is performed at a temperature in the range of 8 to 20 °C., or 20 to 60 °C.

9. Process according to at least one of claims 2 to 8, **characterized in that** a retentate having at least 15% by weight dry matter and at least 10% by weight sugar is produced in the nanofiltration step and/or reverse osmosis step.

10. Process according to at least one of claims 2 to 9, **characterized in that** lactase is added to the NF/RO retentate before the heat treatment step and subjected to a hydrolysis step.

11. Process according to at least one of claims 2 to 10, **characterized in that** the heat treatment step is performed in a stirred tank reactor or a heat exchanger.

12. Process according to at least one of claims 2 to 11, **characterized in that** it is performed continuously, semi-continuously or discontinuously.

## Revendications

1. Beurre doté d'une note de caramel, obtenu ou qui peut être obtenu par le fait que :
(a) on sépare du lait entier en une fraction de lait maigre et une fraction de crème ;
(b) on soumet la fraction de crème ainsi obtenue à une nanofiltration (NF) et/ou une osmose inverse (OI) avec obtention d'un rétentat de NF/OI et d'un perméat de NF/OI, la nanofiltration étant mise en oeuvre avec une membrane qui présente un diamètre de pores dans la plage de 100 à 5 000 daltons ;
(c) on soumet le rétentat NF/OI ainsi obtenu à un traitement thermique à une température dans la plage de 60 à 125 °C pendant une durée de 10 à 30 minutes, le sucre contenu dans celui-ci caramélisant au moins partiellement ; et
(d) on transforme en beurre, d'une manière connue en soi, le rétentat NF/OI caramélisé ainsi obtenu.

2. Procédé pour la préparation d'un beurre doté d'une note de caramel, comprenant ou constitué des étapes suivantes :
(a) séparation d'un lait entier en une fraction de lait maigre et une fraction de crème ;
(b) soumission de la fraction de crème ainsi obtenue à une nanofiltration (NF) et/ou une osmose inverse (OI) avec obtention d'un rétentat de NF/OI et d'un perméat de NF/OI, la nanofiltration étant mise en oeuvre avec une membrane qui présente un diamètre de pores dans la plage de 100 à 5 000 daltons ;
(c) soumission du rétentat NF/OI ainsi obtenu à un traitement thermique à une température dans la plage de 60 à 125 °C pendant une durée de 10 à 30 minutes, le sucre contenu dans celui-ci caramélisant au moins partiellement ; et
(d) transformation en beurre, d'une manière connue en soi, du rétentat NF/OI caramélisé ainsi obtenu.

3. Procédé selon la revendication 2, **caractérisé en ce qu'**on met en oeuvre la séparation soit dans une plage de température de 8 à 20 °C, soit de 20 à 60 °C.

4. Procédé selon les revendications 2 et/ou 3, **caractérisé en ce qu'**on prépare une fraction de crème, lors de la séparation, qui présente au moins 10 % en poids de graisse et au moins 3 % en poids de masse sèche.

5. Procédé selon au moins l'une des revendications 2 à 4, **caractérisé en ce qu'**on met en oeuvre la avec une membrane qui présente un diamètre de pores dans la plage de 500 à 2 000 daltons.

6. Procédé selon au moins l'une des revendications 2 à 5, **caractérisé en ce qu'**on met en oeuvre la à une température dans la plage de 8 à 20 °C ou de 20 à 60 °C.

7. Procédé selon au moins l'une des revendications 2 à 6, **caractérisé en ce qu'**on met en oeuvre l'osmose inverse à une pression de 3 à 80 bars.

8. Procédé selon au moins l'une des revendications 2 à 7, **caractérisé en ce qu'**on met en oeuvre l'osmose inverse à une température dans la plage de 8 à 20 °C ou de 20 à 60 °C.

9. Procédé selon au moins l'une des revendications 2 à 8, **caractérisé en ce qu'**on prépare un rétentat, lors de la et/ou de l'osmose inverse, qui présente au moins 15 % en poids de masse sèche et au moins 10 % en poids de sucre.

10. Procédé selon au moins l'une des revendications 2 à 9, **caractérisé en ce qu'**on mélange le rétentat NF/OI avec une lactase avant le traitement thermique et on le soumet à une hydrolyse.

11. Procédé selon au moins l'une des revendications 2 à 10, **caractérisé en ce qu'**on met en oeuvre le traitement thermique dans une cuve d'agitation ou dans un échangeur de chaleur.

12. Procédé selon au moins l'une des revendications 2 à 11, **caractérisé en ce qu'**on le met en oeuvre de manière continue, de manière semi-continue ou de manière discontinue.
